(19) Europäisches Patentamt / European Patent Office / Office européen des brevets

(11) **EP 3 515 170 B1**

(12) **EUROPEAN PATENT SPECIFICATION**

(45) Date of publication and mention of the grant of the patent:
**26.07.2023 Bulletin 2023/30**

(21) Application number: **17767856.2**

(22) Date of filing: **20.09.2017**

(51) International Patent Classification (IPC):
**A01D 34/73** $^{(2006.01)}$

(52) Cooperative Patent Classification (CPC):
**A01D 34/73; A01D 34/733**

(86) International application number:
**PCT/EP2017/073734**

(87) International publication number:
**WO 2018/054948 (29.03.2018 Gazette 2018/13)**

(54) **CUTTING MEANS FOR LAWNMOWER MACHINE**

SCHNEIDEVORRICHTUNG FÜR EINEN RASENMÄHER

MOYEN DE COUPE POUR TONDEUSE À GAZON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.09.2016 IT 201600094956**

(43) Date of publication of application:
**31.07.2019 Bulletin 2019/31**

(73) Proprietor: **Cucchi Giovanni & C. S.r.l.**
**20041 Bussero (IT)**

(72) Inventor: **CUCCHI, Cesare**
**20041 Bussero, Milano (IT)**

(74) Representative: **Luppi Intellectual Property S.r.l.**
**Viale Corassori, 54**
**41124 Modena (IT)**

(56) References cited:
EP-A1- 1 588 786    DE-U1- 20 112 996
US-A- 4 329 834    US-A- 5 467 586
US-A- 5 839 263    US-A1- 2016 044 864

**Description**

BACKGROUND OF THE INVENTION

This invention refers to a cutting means for a lawnmower machine.

PRIOR ART

Various geometrical configurations of cutting blades are known that are shaped for being fitted to a rotatable vertical shaft of a lawnmower, which are suitable for cutting the grass of meadows and lawns. During operation, the blades rotate inside a cutting chamber, which is bounded by a guard, in this manner hitting the blades of grass, which are cut and separated from the ground. In addition to the cutting action, the blades have to be suitably shaped and configured to convey, by the dragging action of the moved air, the pieces of cut grass to a port that leads into the inside of a collecting container connected removably to the lawnmower machine.

Very often, it is desired to avoid collecting and disposing of cut grass, both for reasons of convenience, rapidity and facility of the mowing operations but also because of the need to mulch the land, i.e. an operation of chopping up or cutting into small pieces the crop residue, such as the blades of cut grass, with subsequent release onto the mowed land. Mulching, in addition to being very convenient because it eliminates the need to collect and dispose of the cut grass, is very useful because it prevents the growth and proliferation of weeds, maintains humidity in the soil in the warmest periods and protects the layer of grass in the coldest months. In addition, the crop residue also acts as a fertiliser of the land. Obviously, for correct and effective mulching, it is necessary have available a suitable "mulching" kit the function of which is to force the pieces of cut grass to remain in the cutting chamber to be subjected to several cutting actions; it is further necessary for the profile of the cutting blade/s to be suitably shaped so that this operation is successful.

An apparatus with blades for mowing vegetation is known from US4329834.

A cutting bar is known from DE20112996.

One drawback of known blades is due to the structural complexity, in particular of the geometric shape that is hardly simple, because of the presence of wings and surfaces with zones on different planes, and the presence of cutting edges that extend according to trajectories that are often not linear but curved in space. Current blades are further obtained from metal plate elements that have rather a considerable width in relation to the length in a longitudinal direction. The considerable mass and the significant width of such blades certainly does not favour the cut capacity of the lawnmower and often, above all in rather thick grass covers, difficult operation of the lawnmower is witnessed, which is forced to work under a strain to maintain the blade rotating. Further, such blades are rather noisy and difficult to make and are thus disadvantageous from the economic point of view.

OBJECTS OF THE INVENTION

One object of the invention is to provide cutting means provided with high performance, in particular provided with optimum cutting and mulching capacity and able to facilitate the operations of cutting and mulching for a lawnmower.

Another object of the invention is to provide cutting means that is provided structurally with a significantly simplified geometrical configuration, thus provided with great reliability and operating duration and which is economically advantageous to make and which requires reduced maintenance.

These and further objects and advantages are achievable by cutting means as defined in the enclosed claims.

SHORT DESCRIPTION OF THE DRAWINGS

The features and advantages of the cutting means according to the invention will become clearer from the following description, with reference to the drawings, in which:

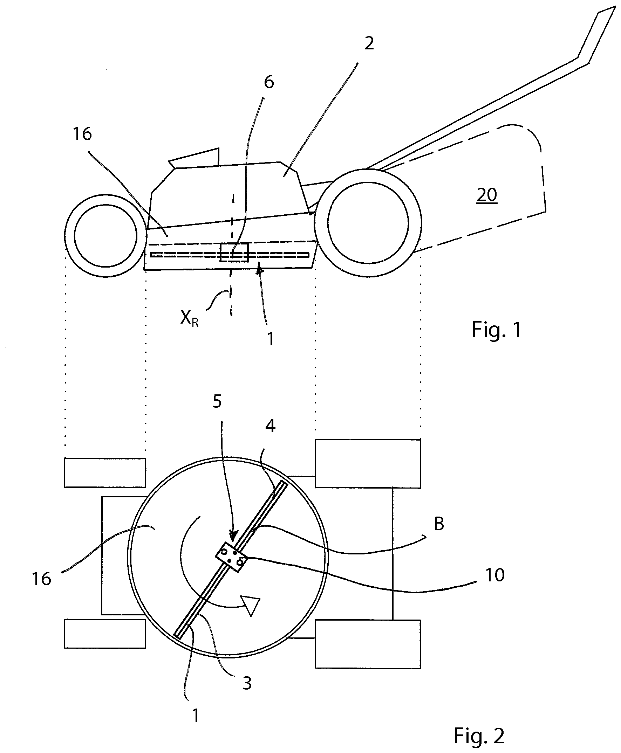

Figure 1 shows a side view showing, schematically, cutting blade means fitted to a common lawnmower machine;
Figure 2 shows from the bottom the lawnmower machine to which the cutting means are fitted;
Figure 3 is a perspective view of a possible embodiment of the cutting means;
Figures 4 to 11 show the cutting blade means made according to further possible embodiments;
Figures 12A and 12B show schematically, by way of comparison, a prior art lawnmower blade and the cutting means during operation;
Figures 13 and 14 show schematically cutting means of the invention during operation and show the cutting and mulching action to which the blades of grass are subj ected;
Figure 15 shows schematically one embodiment of the cutting means of the invention;
Figure 16 is another view of the cutting means of Figure 15;
Figure 17 shows an enlarged detail of Figure 16.

DETAILED DESCRIPTION OF THE INVENTION

With reference to the enclosed Figures, a cutting means 1 is disclosed for a lawnmower machine 2 of any type, for example of the type that is pushed or of the self-propelled type. The cutting means 1 that will be disclosed is configured for cutting grass E but is, in particular, suitable for mulching, i.e. for cutting the grass without the need for the grass to be collected in containers 20.

The cutting means 1 comprises a first cutting portion 3 and a second cutting portion 4 that extend on opposite sides with respect to an intermediate zone 5 for connecting to a rotating shaft 6 of the aforesaid lawnmower machine 2.

The first cutting portion 3 and the second cutting portion 4 extend along a longitudinal axis $A_L$. In particular, during operation in the assembled configuration, the longitudinal axis $A_L$ is orthogonal to a rotation $X_R$ axis with respect to which the cutting means 1 is rotated by the motor of the lawnmower machine 2.

The first cutting portion 3 and the second cutting portion 4 can be configured as two distinct and separate bodies, or can be obtained as a single piece, such as a bar B made of metal or of another suitable material.

The cutting means 1 comprises plate means 10A, 10B provided with screw means 11, 12 for clamping the first 3 and second 4 cutting portions and connecting the lawnmower machine 2 to the rotating shaft 6.

The first cutting portion 3 and the second cutting portion 4 have a prismatic shape and comprise one or more edge zones 7 or 8 for cutting and chopping up the crop residue C and subsequently releasing the latter on the land T.

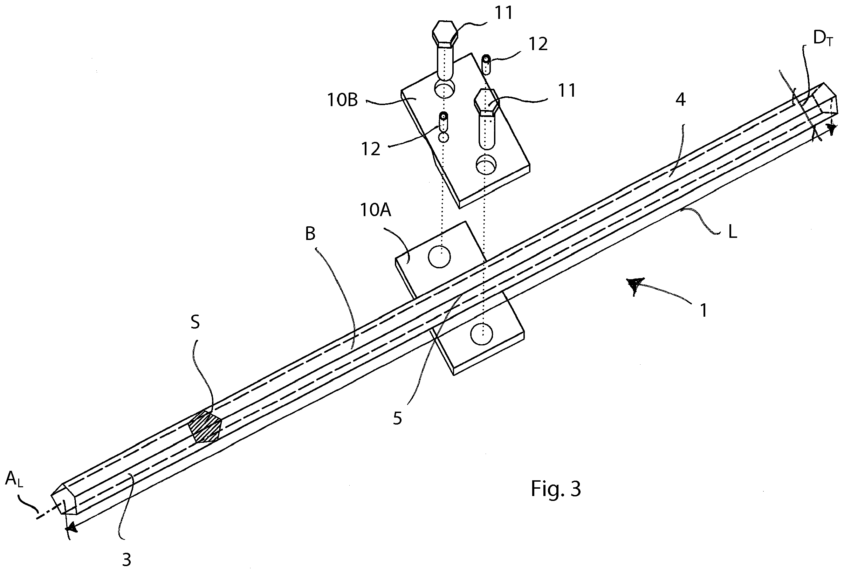

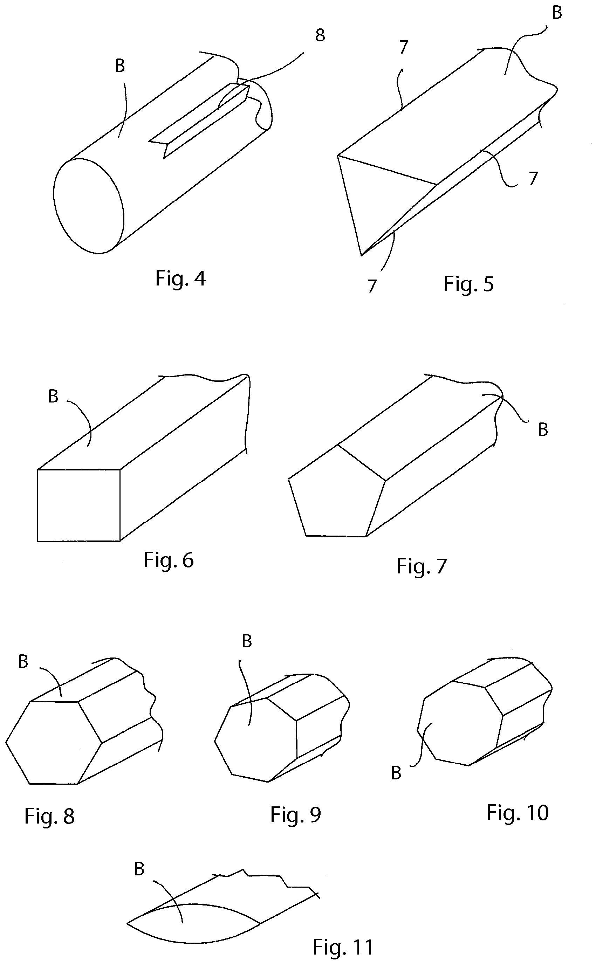

The cutting means 1, in particular, comprises a bar B having a cross section S the profile of which is a polygon with a desired number of sides equal to or greater than three. Figure 3 shows a possible embodiment in which the bar B has a section with a pentagonal profile. Nevertheless, the cross section can have a triangular shape, a square shape, a hexagonal shape, a heptagonal shape, an octagonal shape, a nonagonal shape, a decagonal shape (as shown schematically in Figures 5 to 10) or another desired polygonal or non-polygonal, regular or also non regular shape. Figure 11 shows another possible form of the cross section S.

The bar B comprises edges 7 that can be suitably sharpened for cutting and chopping up the grass E. The bar B can have a circular or semicircular (semiround) section.

In the case of the circular section, as shown in Figure 4, on the first 3 and second 4 cutting portions, edge zones are obtained that are shaped as protrusions 8 for cutting and chopping up the grass, as shown by way of example in Figure 4.

The bar B that defines the cutting means 1 can be easily obtained for example by extrusion or drawing of metal.

The cross section S has a polygonal profile that can be inscribed in a circumference with a diameter D that is at most equal to 20 mm.

In particular, the bar B has cross-section having a compact shape. More particularly, the perimeter of the cross section is axially symmetrical (relative to a longitudinal axis $A_L$ of the bar B).

In a preferred version, the said cross-section is configured so that it can be inscribed in a circumference with a diameter D that is at most equal to 12 mm. The cross-section has a circle shape (i.e. circular shape), or a regular polygon shape.

Owing to the above mentioned geometrical configuration, that is owing to the compact cross section, a low inertial mass and an improved cutting efficiency are achieved, compared to the prior art blade having a flattened shape.

The diameter D of the bar B must be chosen in relation to the total length L and possibly taking into account the operating parameters of the motor of the lawnmower 2 intended for receiving the cutting means 1.

The diameter D must be chosen appropriately so as not to be too small in order to withstand, during operation, possible stress in the interaction with stones or other undesired objects, but also not too large in order to contain as far as possible the dynamic inertia and thus facilitate the operation of the lawnmower 2. From numerous experimental tests it has been found surprisingly that a diameter D that is no greater than 20 mm enables excellent results to be obtained in the operations of cutting and mulching.

The length L, in a longitudinal direction, can be chosen according to the dimensions of the cutting chamber 16 of the lawnmower 2. In particular, the length L can be at most equal to 600 mm. The cutting means 1 is so configured that the ratio R between the maximum transverse dimension $D_T$ and length L is not greater than 0.04. For example, a geometric configuration with R equal to 0.016 achieves excellent cutting means 1 performance.

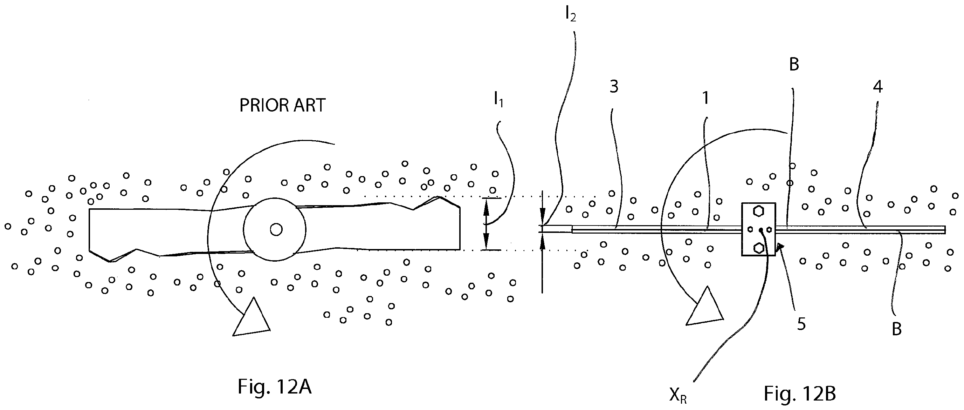

Figures 12A and 12B compare a prior art blade (Figure 12A) with the cutting means 1 according to the invention (Figure 12B). The difference in area occupied by the two different devices when they interact with a grass cover are clear. The blade of known type occupies a strip of area having a width $I_1$ which is much greater than the width $I_2$ of the strip of area occupied by the bar B according to the invention. The advantage of having a width $I_2$ that is much less, made possible by the bar configuration instead of the flat plate configuration that is typical of the prior art, enables easier interaction of the cutting bar B with the grass cover, i.e. greater penetration and thus easier cutting of the blades of grass. Further, this reduced width enables the stress to be reduced to which the motor of the lawnmower 2 is subjected, inasmuch as the friction area is less that is established between the surface of the cutting portions 3 and 4 and the grass cover. A general improvement of the operating conditions of the lawnmower and of cutting and mulching performance results.

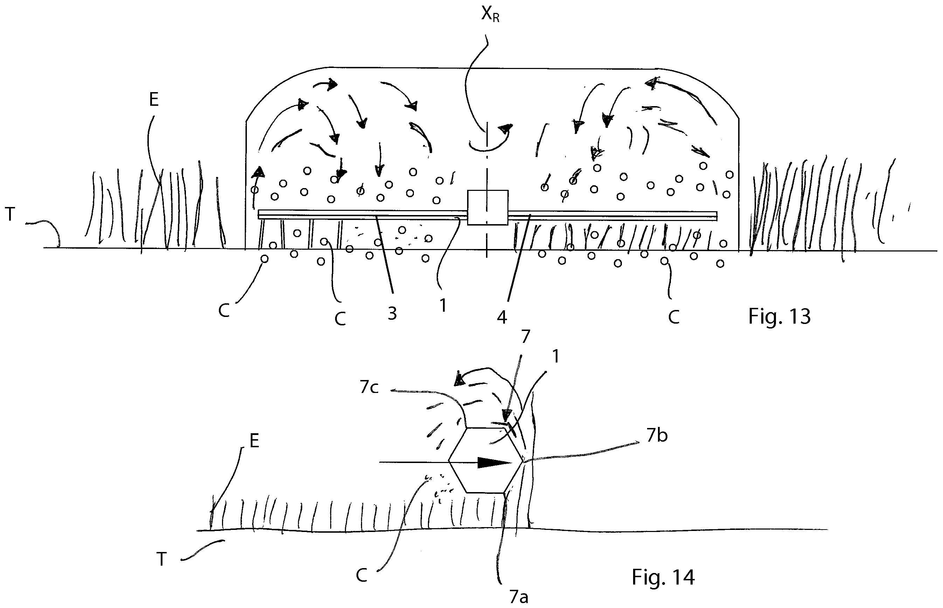

Figures 13 and 14 on the other hand show the positive effect arising from the particular prismatic bar configuration of the cutting means 1. The numerous edges 7a, 7b, 7c etc., act to cut, into several zones, the blades of grass that, once they have been separated from the grass cover, and pushed upwards, fall back down to be subjected to multiple cutting actions until they are reduced to small dimensions and are released onto the land. Accordingly, as shown in Figure 13, the blades of grass cut by the cutting means 1 rotating around the axis $X_R$, advance upwards inside the cutting chamber to then fall back onto the cutting portions 3 and 4 that perform on the blades of grass repeated cutting actions until the blades of grass are cut into little pieces.

The portions of grass that are thus cut into little portions are then released directly onto the land without having to be collected, bestowing on the land also the typical beneficial effects of mulching.

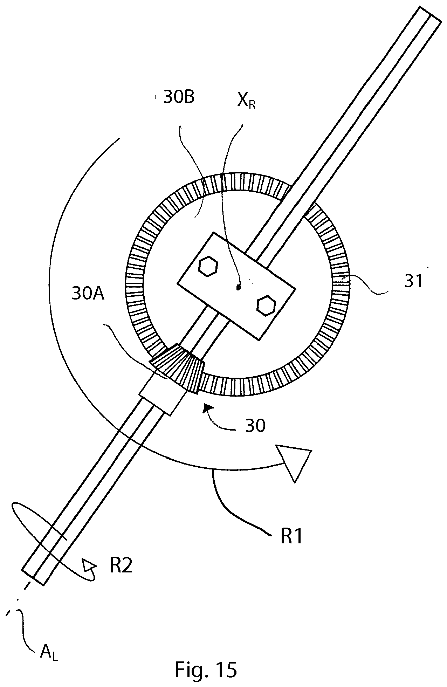

With reference to Figures 15 to 17, one embodiment of cutting means according to the invention is disclosed below in which the same references will be used to indicate parts that are the same as or similar to the embodiments that have already been disclosed.

In the following embodiment, the first cutting portion 3 and the second cutting portion 4 are configured in a manner that is completely similar to what has been disclosed previously. Nevertheless, this embodiment differs through the fact that the cutting means 1 is configured for operating with two rotation movements, a rotation movement R1 around the axis $X_R$ of the shaft 6, and another rotation movement R2, around its own longitudinal axis $A_L$, as explained better below. The addition of a further rotation movement, this time around the longitudinal axis $A_L$ of the cutting means 1, enables the operating efficacy and efficiency of the cutting means 1 to be improved further.

The cutting means 1 is provided with toothed coupling means 30 configured for transmitting to the first cutting portion 3 and/or to the second cutting portion 4 also a rotation around said longitudinal axis $A_L$, in addition to the rotation around the aforesaid axis $X_R$.

More precisely, the toothed coupling means 30 comprises a toothed conical element 30A, fitted integrally to the first cutting portion 3 and/or to the second cutting portion 4, and a stationary discoidal element 30B, provided at the perimeter of a toothed annular portion 31 shaped for engaging the toothed conical element 30A to rotate the cutting means 1 on itself.

The discoidal element 30B is arranged for being fixed, by screws 42, or other equivalent means, to the lower portion of the lawnmower machine 2, so as to be in a stationary position, and, interposed between the plate means 10 and the bottom of the lawnmower machine 2, the shaft 6 of the motor protrudes from below. A suitable central opening on the discoidal element 30B enables the shaft 6 and the plate means 10 that support the bar cutting portions 3, 4 to be connected.

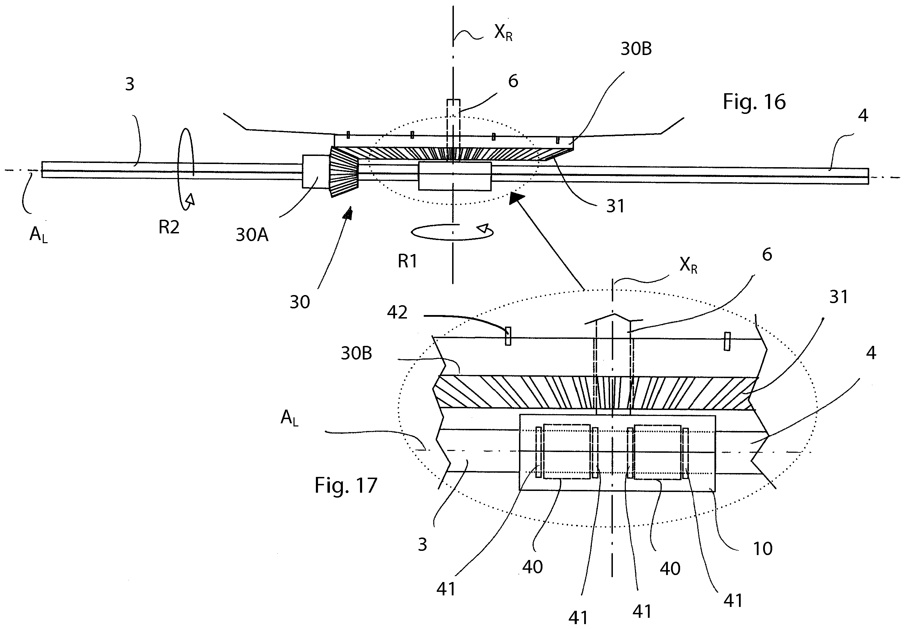

The cutting means 1 further comprises bearing means 40, housed in the plate means 10 for coupling the first cutting portion 3 and/or the second cutting portion 4 to the latter with a rotatable coupling to permit rotation thereof around the longitudinal axis $A_L$, in the absence of friction. Ring elements 41, for example of the "Seeger" type are also provided or other commercially available equivalent retaining elements, engaging respective grooves of the cutting means 1, for retaining the first cutting portion 3 and/or the second cutting portion 4 in a configuration coupled with the plate means 10, preventing on the other hand a longitudinal movement thereof in relation to the plate means 10. In the embodiment shown in Figure 17 two bearing elements 40 and pairs of "Seeger" rings 41, or equivalent means are visible that are located on the sides of each bearing element 40.

From what has been disclosed and illustrated it is clear that the cutting means 1 according to the invention successfully achieves the set objects set out above.

## Claims

1. Cutting means for a lawnmower machine (2), configured for cutting grass (E) and mulching, comprising a first cutting portion (3) and a second cutting portion (4) that extend on opposite sides with respect to an intermediate zone (5) for connecting to a rotating shaft (6) of said lawnmower machine (2), that is suitable for rotating said cutting means (1) around a rotation axis ($X_R$),
wherein said first cutting portion (3) and said second cutting portion (4) are configured as a bar (B) having a circular shaped cross-section or having a prismatic shape with a regular polygon shaped cross-section, and comprise respectively protrusions (8) or more edge zones (7), for cutting and chopping up crop residue (C) and subsequent release onto the land (T), said cross-section being so configured as to be inscribed in a circumference with a diameter (D) that is at most equal to 20 mm **CHARACTERISED IN THAT** said first cutting portion (3) and said second cutting portion (4) extend along a longitudinal axis ($A_L$), toothed coupling means (30) being further included configured for transmitting to said first cutting portion (3) and/or to said second cutting portion (4) also a rotation around said longitudinal axis ($A_L$).

2. Cutting means (1) according to claim 1, wherein said toothed coupling means (30) comprises a toothed conical element (30A), mounted integrally on said first cutting portion (3) and/or on said second cutting portion (4), and a discoidal element (30B), which is suitable for being fixed, in a stationary position, to said lawnmower machine (2) and is provided at the perimeter with a toothed annular portion (31) shaped for engaging said toothed conical element (30A) to rotate said cutting means (1) on itself.

3. Cutting means (1) according to any preceding claim, wherein said first cutting portion (3) and said second cutting portion (4) are defined by a bar (B) having a cross section (S) the profile of which is a polygon with a number (n) of sides equal to or greater than three.

**4.** Cutting means (1) according to any preceding claim, wherein said bar (B) has a cross section (S) having a polygonal profile that can be inscribed in a circumference with a diameter (D) that is at most equal to 12 mm.

**5.** Cutting means (1) according to any preceding claim, wherein said bar (B) has a cross section (S) having a profile chosen from a group comprising: a triangular shape, a square shape, a pentagonal shape, a hexagonal shape, a heptagonal shape, an octagonal shape, a nonagonal shape, a decagonal shape.

**6.** Cutting means (1) according to any preceding claim, wherein said bar (B) has a prism shape the edges (7) of which are sharpened to perform cutting and chopping up of the grass (E).

**7.** Cutting means (1) according to any one of claims 1 to 3, wherein said bar has a cross section (S) having a circular profile having a diameter (D) that is less than about 12 mm.

**8.** Cutting means (1) according to any preceding claim, wherein said first (3) and second (4) cutting portions are obtained on a bar (B) in a single piece.

**9.** Cutting means (1) according to any preceding claim, and comprising plate means (10A, 10B) provided with screw means (11, 12) for supporting said first (3) and second (4) cutting portions and for connecting to said rotating shaft (6) of said lawnmower machine (2).

**10.** Cutting means (1) according to claim 9, further comprising bearing means (40) for coupling said first cutting portion (3) and/or said second cutting portion (4) rotatably with respect to said plate means (10A, 10B) permitting rotation around said longitudinal axis ($A_L$), ring retaining means (41) being further provided for retaining said first cutting portion (3) and/or said second cutting portion (4) in a configuration coupled with said plate means (10A, 10B), preventing a longitudinal movement thereof with respect to said plate means (10A, 10B).

**11.** Cutting means (1) according to claim 9, as appended to any one of claims 3 to 8, wherein said plate means (10A, 10B) is configured for clamping said first (3) and second (4) cutting portions in a fixed position with respect to said plate means (10A, 10B).

**12.** Cutting means (1) according to any one of claims 10 to 11, wherein said first (3) and second (4) cutting portions are obtained respectively from two distinct pieces of bar (B), which are mutually connectable by said plate means (10A, 10B) and said screw means (11, 12).

**13.** Cutting means (1) according to any preceding claim, having a length (L), in a longitudinal direction, equal to at most 600 mm, and a ratio (R) between the maximum transverse dimension ($D_T$) and length (L) that satisfies the following relationship:

$$R<0.04$$

**Patentansprüche**

**1.** Schneidmittel für eine Rasenmähmaschine (2), die zum Schneiden von Gras (E) und zum Mulchen konfiguriert ist, umfassend einen ersten Schneidteil (3) und einen zweiten Schneidteil (4), die sich auf gegenüberliegenden Seiten in Bezug auf einen Zwischenbereich (5) zur Verbindung mit einer Drehwelle (6) der Rasenmähmaschine (2) erstrecken, die geeignet ist, die Schneidmittel (1) um eine Drehachse ($X_R$) zu drehen, wobei der erste Schneidteil (3) und der zweite Schneidteil (4) als Stab (B) konfiguriert sind, der einen kreisförmigen Querschnitt oder eine prismatische Form mit einem regelmäßigen polygonförmigen Querschnitt aufweist, und jeweils Vorsprünge (8) oder mehrere Randzonen (7) umfassen, um Ernterückstände (C) zu schneiden und zu zerkleinern und anschließend auf den Boden (T) abzugeben, wobei der Querschnitt so konfiguriert ist, dass er in einen Umfang mit einem Durchmesser (D) eingeschrieben ist, der höchstens gleich 20 mm ist, **DADURCH GEKENNZEICHNET, DASS** sich der erste Schneidteil (3) und der zweite Schneidteil (4) entlang einer Längsachse ($A_L$) erstrecken, wobei weiter gezahnte Kopplungsmittel (30) enthalten sind, die so konfiguriert sind, dass sie auf den ersten Schneidteil (3) und/oder auf den zweiten Schneidteil (4) auch eine Drehung um die Längsachse ($A_L$) übertragen.

**2.** Schneidmittel (1) nach Anspruch 1, wobei die gezahnten Kopplungsmittel (30) ein gezahntes konisches Element (30A) umfassen, das einstückig an dem ersten Schneidteil (3) und/oder an dem zweiten Schneidteil (4) angebracht ist, und ein scheibenförmiges Element (30B), das geeignet ist, in einer stationären Position an der Rasenmähmaschine (2) befestigt zu werden, und das am Umfang mit einem gezahnten ringförmigen Teil (31) versehen ist, der so geformt ist, dass er in das gezahnte konische Element (30A) eingreift, um die Schneidmittel (1) um sich selbst zu drehen.

**3.** Schneidmittel (1) nach einem der vorstehenden Ansprüche, **dadurch gekennzeichnet, dass** der erste Schneidteil (3) und der zweite Schneidteil (4) durch einen Stab (B) mit einem Querschnitt (S) definiert sind, dessen Profil ein Polygon mit einer Anzahl (n) von Seiten gleich oder größer als drei ist.

**4.** Schneidmittel (1) nach einem der vorstehenden Ansprüche, **dadurch gekennzeichnet, dass** der Stab (B) einen Querschnitt (S) mit einem polygonalen Profil aufweist, das in einen Umfang mit einem Durchmesser (D) von höchstens 12 mm eingeschrieben werden kann.

**5.** Schneidmittel (1) nach einem der vorstehenden Ansprüche, wobei der Stab (B) einen Querschnitt (S) mit einem Profil aufweist, das aus einer Gruppe ausgewählt ist, umfassend: eine dreieckige Form, eine quadratische Form, eine fünfeckige Form, eine sechseckige Form, eine siebeneckige Form, eine achteckige Form, eine neuneckige Form, eine zehneckige Form.

**6.** Schneidmittel (1) nach einem der vorstehenden Ansprüche, wobei der Stab (B) die Form eines Prismas aufweist, dessen Kanten (7) geschärft sind, um das Schneiden und Zerkleinern des Grases (E) durchzuführen.

**7.** Schneidmittel (1) nach einem der Ansprüche 1 bis 3, wobei der Stab einen Querschnitt (S) mit einem kreisförmigen Profil mit einem Durchmesser (D) von weniger als etwa 12 mm aufweist.

**8.** Schneidmittel (1) nach einem der vorstehenden Ansprüche, wobei das erste (3) und das zweite (4) Schneidteil auf einem Stab (B) in einem einzigen Stück erhalten werden.

**9.** Schneidmittel (1) nach einem der vorstehenden Ansprüche, umfassend Plattenmittel (10A, 10B), die mit Schraubmitteln (11, 12) versehen sind, um den ersten (3) und den zweiten (4) Schneidteil zu tragen und um mit der Drehwelle (6) der Rasenmähmaschine (2) verbunden zu werden.

**10.** Schneidmittel (1) nach Anspruch 9, weiter umfassend Lagermittel (40) zum drehbaren Koppeln des ersten Schneidteils (3) und/oder des zweiten Schneidteils (4) in Bezug auf die Plattenmittel (10A, 10B), die eine Drehung um die Längsachse ($A_L$) ermöglichen, wobei Ringhaltemittel (41) weiter vorgesehen sind, um das erste Schneidteil (3) und/oder das zweite Schneidteil (4) in einer mit den Plattenmitteln (10A, 10B) gekoppelten Konfiguration zu halten, die eine Längsbewegung davon in Bezug auf die Plattenmittel (10A, 10B) verhindern.

**11.** Schneidmittel (1) nach Anspruch 9, wie einem der Ansprüche 3 bis 8 beigefügt, wobei die Plattenmittel (10A, 10B) so konfiguriert ist, dass es den ersten (3) und den zweiten (4) Schneidteil in einer festen Position in Bezug auf die Plattenmittel (10A, 10B) klemmt.

**12.** Schneidteil (1) nach einem der Ansprüche 10 bis 11, wobei das erste (3) und das zweite (4) Schneidteil jeweils aus zwei verschiedenen Stabstücken (B) erhalten werden, die durch die Plattenmittel (10A, 10B) und die Schraubmittel (11, 12) miteinander verbunden werden können.

**13.** Schneidmittel (1) nach einem der vorstehenden Ansprüche, mit einer Länge (L) in Längsrichtung von höchstens 600 mm und einem Verhältnis (R) zwischen der maximalen Querabmessung ($D_T$) und der Länge (L), das die folgende Beziehung erfüllt:

$$R < 0,04$$

**Revendications**

**1.** Moyen de coupe pour une tondeuse à gazon (2), configuré pour la coupe de l'herbe (E) et le paillage, comprenant une première partie de coupe (3) et une seconde partie de coupe (4) qui s'étendent sur des côtés opposés par rapport à une zone intermédiaire (5) pour se raccorder à un arbre rotatif (6) de ladite tondeuse à gazon (2), qui est adapté pour faire tourner ledit moyen de coupe (1) autour d'un axe de rotation ($X_R$),
dans lequel ladite première partie de coupe (3) et ladite seconde partie de coupe (4) sont configurées comme une barre (B) présentant une section transversale de forme circulaire ou présentant une forme prismatique avec une section transversale de forme de polygone régulier, et comprennent respectivement des saillies (8) ou plusieurs zones de bord (7), pour la coupe et le hachage de résidus de cultures (C) et la libération subséquente sur le terrain (T), ladite section transversale étant configurée de manière à être inscrite dans une circonférence avec un diamètre (D) qui est au plus égal à 20 mm, **CARACTÉRISÉ EN CE QUE** ladite première partie de coupe (3) et ladite seconde partie de coupe (4) s'étendent le long d'un axe longitudinal ($A_L$), des moyens d'accouplement dentés (30) étant inclus en outre, configurés pour transmettre également à ladite première partie de coupe (3) et/ou à ladite seconde partie de coupe (4) une rotation autour dudit axe longitudinal ($A_L$).

**2.** Moyen de coupe (1) selon la revendication 1, dans lequel lesdits moyens d'accouplement dentés (30) comprennent un élément conique denté (30A), monté solidairement sur ladite première partie de coupe (3) et/ou sur ladite seconde partie de coupe (4), et un élément discoïdal (30B), qui est adapté pour être fixé, dans une position stationnaire, à ladite tondeuse à gazon (2) et est pourvu au niveau du périmètre d'une partie annulaire dentée (31) profilée pour engager ledit élément conique denté (30A) pour faire tourner ledit moyen de coupe (1) sur lui-même.

3. Moyen de coupe (1) selon une quelconque revendication précédente, dans lequel ladite première partie de coupe (3) et ladite seconde partie de coupe (4) sont définies par une barre (B) présentant une section transversale (S) dont le profil est un polygone avec un nombre (n) de côtés égal ou supérieur à trois.

4. Moyen de coupe (1) selon une quelconque revendication précédente, dans lequel ladite barre (B) présente une section transversale (S) présentant un profil polygonal qui est inscrit dans une circonférence avec un diamètre (D) qui est au plus égal à 12 mm.

5. Moyen de coupe (1) selon une quelconque revendication précédente, dans lequel ladite barre (B) présente une section transversale (S) présentant un profil choisi à partir d'un groupe comprenant : une forme triangulaire, une forme carrée, une forme pentagonale, une forme hexagonale, une forme heptagonale, une forme octogonale, une forme ennéagonale, une forme décagonale.

6. Moyen de coupe (1) selon une quelconque revendication précédente, dans lequel ladite barre (B) présente une forme de prisme dont les bords (7) sont aiguisés pour réaliser la coupe et le hachage de l'herbe (E).

7. Moyen de coupe (1) selon l'une quelconque des revendications 1 à 3, dans lequel ladite barre présente une section transversale (S) présentant un profil circulaire présentant un diamètre (D) qui est inférieur à 12 mm.

8. Moyen de coupe (1) selon une quelconque revendication précédente, dans lequel lesdites première (3) et seconde (4) parties de coupe sont obtenues sur une barre (B) d'une seule pièce.

9. Moyen de coupe (1) selon une quelconque revendication précédente, et comprenant des moyens de plaque (10A, 10B) munis de moyens de vis (11, 12) pour supporter lesdites première (3) et seconde (4) parties de coupe et pour se relier audit arbre rotatif (6) de ladite tondeuse à gazon (2).

10. Moyen de coupe (1) selon la revendication 9, comprenant en outre des moyens de palier (40) pour accoupler ladite première partie de coupe (3) et/ou ladite seconde partie de coupe (4) de manière rotative par rapport auxdits moyens de plaque (10A, 10B) en permettant une rotation autour dudit axe longitudinal ($A_L$), des moyens de retenue annulaires (41) étant disposés en outre pour retenir ladite première partie de coupe (3) et/ou ladite seconde partie de coupe (4) dans une configuration accouplée auxdits moyens de plaque (10A, 10B), en empêchant un mouvement longitudinal de celles-ci par rapport auxdits moyens de plaque (10A, 10B).

11. Moyen de coupe (1) selon la revendication 9, lorsqu'elle dépend de l'une quelconque des revendications 3 à 8, dans lequel lesdits moyens de plaque (10A, 10B) sont configurés pour serrer lesdites première (3) et seconde (4) parties de coupe dans une position fixe par rapport auxdits moyens de plaque (10A, 10B).

12. Moyen de coupe (1) selon l'une quelconque des revendications 10 à 11, dans lequel lesdites première (3) et seconde (4) parties de coupe sont obtenues respectivement à partir de deux pièces distinctes d'une barre (B), qui peuvent être mutuellement reliées par lesdits moyens de plaque (10A, 10B) et lesdits moyens de vis (11, 12).

13. Moyen de coupe (1) selon une quelconque revendication précédente, présentant une longueur (L), dans une direction longitudinale, égale à au plus 600 mm, et un rapport (R) entre la dimension transversale maximale ($D_T$) et la longueur (L) qui satisfait à la relation suivante :

$$R < 0,04$$

Fig. 1

Fig. 2

Fig. 3

Fig. 4

Fig. 5

Fig. 6

Fig. 7

Fig. 8

Fig. 9

Fig. 10

Fig. 11

PRIOR ART

Fig. 12A

Fig. 12B

Fig. 13

Fig. 14

Fig. 15

Fig. 16

Fig. 17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4329834 A
- DE 20112996